# EUROPEAN PATENT APPLICATION

(11) **EP 1 804 522 A1**
(43) Date of publication of application: **04.07.2007**
(21) Application number: 05028537.8
(22) Date of filing: 27.12.2005
(51) Int. Cl.: H04Q 1/14, H01R 9/24

(54) **A wire guide plate and a telecommunications module having a wire guide plate**

(71) Applicant: 3M Innovative Properties Company, St. Paul, Minnesota 55133-3427 (US)
(72) Inventor: Metral, Guy, 74300 Cluses (FR); Bonvallat, Pierre, 74300 Cluses (FR); Perrier, Gaetan, 74300 Cluses (FR)
(74) Representative: Bergen, Katja

(57) **Abstract**

A wire guide plate (10), which is attachable to a telecommunications module having telecommunications contacts, and adapted to guide wires (12,14) to different sides (16,18) of the telecommunications module, where the wires (12,14) are connectable with the telecommunications contacts, has at least one first (22) and at least one second wire guide (24), and all wire guides (22,24) have entries (32) and at least the first wire guide (22) has an exit in the vicinity of at least one telecommunications contact, wherein the entries (32) of all wire guides (22,24) are located on a first side (26), the exits of the first wire guides (22) are located on a second side (16), and the second wire guide (24) is adapted to guide wires (14) to a third side (18) different from the second side (16).

## Description

### Technical Field

The invention relates to a wire guide plate and a telecommunications module having at least one wire guide plate.

### Background

In the field of telecommunications, numerous customers are connected with the switch of a telecommunications company via telecommunications lines. Customers are also sometimes referred to as subscribers. The switch is also often called an exchange or "PBX" (central office exchange operated by the telecommunications company). Between the subscriber and the switch, sections of telecommunications lines are connected with telecommunications modules. Telecommunications modules establish an electrical connection between a wire, which is attached to the telecommunications module at a first side, and another wire, which is attached to the telecommunications module at a second side. The wires of one side can also be called incoming wires and the wires of the other side can be called outgoing wires. Plural telecommunications modules can be put together at a distribution point, such as a main distribution frame, an intermediate distribution frame, an outside cabinet or a distribution point located, for example, in an office building or on a particular floor of an office building. To allow flexibility in wiring some telecommunications lines are connected with first telecommunications modules in a manner to constitute a permanent connection. Flexibility is realized by so-called jumpers or cross connects, which flexibly connect contacts of the first telecommunications module with contacts of a second telecommunications module. These jumpers can be changed when, for example, a person moves within an office building to provide a different telephone (i.e., a different telephone line) with a telephone number the relocated person intends to keep. In the telecommunications module, disconnection points can be located in the electrical connection between the two sides. At such disconnection points, disconnection plugs can be inserted to disconnect the line. Protection plugs or magazines may also be connected at a disconnection point to the module to protect equipment connected to the wires from overcurrent and overvoltage. Moreover, test plugs can be inserted at a disconnection point in order to test or monitor a line.

Recently, Asymmetric Digital Subscriber Line (or "ADSL") technology has spread widely in the field of telecommunications. This technology allows at least two different signals to be transmitted on a single line and is achieved by transmitting the different signals at different frequencies along the same line. Signals are combined at a particular point in the telecommunications line and split at another point. In particular, at the subscriber side separate voice and data signals are combined and sent to the central office over the same line. In the central office the combined signal is split. For the transmission of voice and data signals to the subscriber, separate voice and data signals are combined at the central office, sent to the subscriber and split at the subscriber side. After splitting the signal, the so-called "plain old telephone service" (or "POTS") can be used to transmit voice signals. The remaining part of the split signal can be used to transmit data or other information. So-called splitters, which are used to split or combine the signal, can generally be arranged at any distribution point. In this context, a POTS wire or POTS jumper indicates a wire that is connected with an exchange of the telecommunications company. A line connection indicates a wire that leads to the subscriber or customer, and, as discussed in more detail below, a DSLAM-wire indicates a wire that is connected with a DSLAM and thus can, for example, transmit data. A DSLAM (Digital Subscriber Line Access Multiplexer) processes the data signal.

In the above described distribution points, an efficient arrangement of the wires, or cables including plural wires, is desirable. A widely used arrangement for guiding wires is explained herein with reference to a main distribution frame. The explanation, however, is applicable to other distribution points. In a main distribution frame, a plurality of wires leading to the subscribers are guided into the distribution point at the subscriber side. At the so-called "backbone" side of the main distribution frame, the cables leading to the switch are terminated (i.e., connected with contacts).

To achieve versatility, telecommunications modules or blocks comprising plural modules are used at both the subscriber and the backbone side. The telecommunications modules typically have at least two rows of contacts. The wires leading to the subscribers are connected at a first row of the subscriber side telecommunications module. Jumpers are connected at the second row of contacts in the subscriber side telecommunications module. These jumpers are, at their other end, connected at a first row of contacts in the backbone side telecommunications module. Wires leading to the switch are connected with the second row of contacts in the backbone side telecommunications module.

In telecommunications systems such as the main distribution frame described above it is usually desirable to guide the incoming and outgoing wires connected at different contact rows of a telecommunications module to different sides of the telecommunications module. In a telecommunications module arranged such that rows of contacts are substantially horizontal, wires connected to a lower row of contacts can be guided to one side, i.e., the left or right side of the telecommunications module, and the wires connected to the upper row of contacts can be guided to the other side, i.e., the right or left side. When a telecommunications module is arranged such that rows of contacts are substantially vertical, corresponding considerations apply, i.e. the wires are guided to the top or bottom side.

As regards further details of wire guiding in general, reference can be made to the applicant's published international patent application WO 03/061303 A2. This document describes a terminal block which comprises, on at least one side thereof (i.e., the top or bottom side) at least two arrays of wire guides. In this manner versatility is improved, as the wires can be guided to either side (i.e., the left or right side) at the top or bottom side of the terminal block. The additional array of wire guides provided on at least one side, however, add to the height of the terminal block, i.e., the dimension from top to bottom when the arrays of wire guides are provided on the top and bottom side.

German patent application no. 26 43 016 A1 discloses wire guides which are adapted to guide wires from a first side to a front side, and from a second side opposite the first side to a rear side opposite the front side.

### Summary of the Invention

The present invention provides a wire guide plate for guiding wires to contacts of a telecommunications module, which enhances the versatility in connection with guiding the wires and, furthermore, conserves space to allow an increase in the density of telecommunications modules provided in a distribution point. In another aspect, the invention provides a telecommunications module having such a wire guide plate with which the mentioned advantages can be achieved.

The wire guide plate described herein is attachable to a telecommunications module having telecommunications contacts. The wire guide plate is adapted to guide wires to different sides of the telecommunications module, where the wires are connectable with the telecommunications contacts. The wire guide plate has at least one first and at least one second wire guide, the wire guides having entries and at least the first wire guides having an exit in the vicinity of at least one telecommunications contact. The entries of the wire guides are located on a first side, and the exits of the first wire guides are located on a second side. The second wire guide is adapted to guide wires to a third side different from the second side.

The telecommunications module described herein has at least one such wire guide plate.

### Brief Description of the Drawings

The invention will be described hereinafter in part by reference to non-limiting examples thereof and with reference to the drawings, in which:
FIG. 1 shows a perspective view of a main surface of the wire guide plate according to an embodiment of the present invention;
FIG. 2 shows a perspective view of an example of a telecommunications module to which the wire guide plate of FIG. 1 is mounted;
FIG. 3 shows a perspective view of another embodiment of a telecommunications module having a short installation depth;
FIG. 4 shows a perspective view of a wire guide plate according to another embodiment of the present invention that is compatible with the telecommunications module of FIG. 3; and
FIG. 5 shows a top view of yet another embodiment of a telecommunications module.

### Detailed Description of Preferred Embodiments

The wire guide plate described herein is attachable to a telecommunications module having telecommunications contacts. It can be attached by means of latch hooks or the like which cooperate with holes, recesses or edges on the telecommunications module. Other means of attachment such as brackets, rails or adhesives are also possible. The attachment may be releasable or permanent. It is also possible for the wire guide plate to be integrally formed with the telecommunications module.

A contact as used herein generally refers to any component adapted to establish electrical connection with at least one outside wire. For this purpose the contact can be formed, for example, as an Insulation Displacement Contact ("IDC"), a wire wrap contact or in any other suitable manner. The contacts can each have a first end adapted to connect with a wire. They can also have a second end at which they are in disconnectable contact with each other. The telecommunications modules of the invention may be formed in an efficient manner and with standardized parts, particularly when the contacts are substantially identical to each other and are arranged symmetrically in the telecommunications module. Thus formed, a line of symmetry extends through the disconnection point where the contacts are in contact with each other.

The telecommunications modules described herein can comprise a housing. The housing can be made of plastic or any other suitable material and can be constituted by one or more components. The housing serves to accommodate the contacts of the telecommunications module. The housing may also have specific structures for positioning the contacts. The housing can, moreover, comprise one or more cavities or receiving spaces adapted to accommodate objects such as functional plugs or any other types of outside modules or parts thereof. Finally, the housing can also comprise suitable structures, typically at or near the outside, to enable the telecommunications module to be mounted to a rack or any other suitable carrier or to hold or secure objects listed above. The telecommunications module generally has a front and a rear side. Usually contacts such as described above will be exposed at the front and/or rear side to allow for connection of wires.

The wire guide plate of the invention is adapted to guide wires to different sides of the telecommunications module, where the wires are connectable with the telecommunications contacts. It is most readily considered a plate as compared to a box or cuboid-type object for the following reasons. A plate can be described to be relatively thin with two relatively large main surfaces and at least one relatively shallow, strip-like side surface. The wire guide plate will generally assume this type of general appearance with details as described below. The plate, however, can have any suitable shape, with a substantially rectangular shape-being currently preferred.

In a first exemplary embodiment, the wire guide plate generally has at least one first wire guide and at least one second wire guide. The wire guide can have any structure suitable for guiding a wire. For example, the wire guide can be formed by one or more ridges which determine, possibly in cooperation with further components, the direction in which a wire will move when it is inserted along the guide to move along the ridge. The wire guides can also be formed as open or closed troughs or channels, which can also serve to guide a wire. The wire guides can alternatively consist of a hook or a through opening which serve for holding or locating the wires at a particular point along their length and/or guiding the wires or bundles of wires.

In the wire guide plate, the wire guides have entries and at least the first wire guide has an exit in the vicinity of at least one telecommunications contact. The wire guide entries are generally located on a first side, the exits of the first wire guides are located on a second side, and the second wire guide is adapted to guide wires to a third side different from the second side. The entries and exits can generally be described as openings permitting access to the wire guides through-which the wires can be inserted to enter the wire guides. The entries and exits are typically located at or near the extremity of the wire guide on the appropriate side of the wire guide plate. By having the entries located on one side, here a first side, the wire guide plate may also be pivotally attached on this side to a telecommunications carrier by means of a hinge-like structure such as snap arms. There is therefore no need to provide excess wire lengths as in the case in which entries are provided on two sides, since wires entering on the first side are not subject to significant extension or excursion, in contrast to wires on a side not having the hinge-like structure.

In this context, it should be noted that the wire guide plate does not necessarily have to be an integral or a one-piece plate. Whereas such an integral or one-piece structure is currently preferred, the wire guide plate can have a structure including more than one component. In a second embodiment, for example, a first component can be constituted by a plate containing at least one first wire guide. A second plate, on a surface of which at least one second wire guide is formed, can be combined with the plate comprising the first wire guide to achieve the desired effects. For example, the second plate can have one or more ridges constituting the second wire guide. When the upper edges of the ridges are in contact with the surface of the first plate, the wire guides can be described to be closed by the cooperation of the wire guiding ridges and the surface of the first plate.

It will be understood that the above-described structures having two plates constitute a wire guide plate as described herein when the two plates are combined with each other. Thus, the wire guides can be formed on one of the surfaces of one of the described plates, which can be an internal surface of the resulting complete wire guide plate.

With the structure described above, i.e., with the second wire guide guiding wires to a third side different from the second side of the wire guide plate, the wire guide plate achieves among the following advantages. On one hand, it is now possible to provide a wire guiding solution for double-sided termination strips, i.e., telecommunication modules having contacts on different sides ("double-sided"), while at the same time providing a very clean cable arrangement. Thus, maintenance as well as installation processes are facilitated. On the other hand, the above-described structure can also be applied to the wire management employed when different kinds of applications arrive in the same telecommunication module, such as POTS and ADSL. This enhances the versatility and allows an efficient arrangement of wires and cables, including plural wires in the surroundings of a telecommunications module. Thus, an efficient guiding of wires and cables can be realized in, along or at a distribution point. Line sharing can be realized by using such a wire guide plate. Line sharing is realized, when different providers use the same telecommunications line to provide different services to the customer. For example, one provider can provide POTS services and another provider can provide ADSL-services. These providers use the same telecommunications line and establish connections at the same distribution point. In such a situation, it may be advantageous when the wires of one provider are guided to the second (front) side of a telecommunications module and the wires of the other provider are guided to the third (rear) side. This provides an efficient separation among the wires of different providers. A further advantage of the invention is that cable side wire management for swiveling termination blocks is made possible. Also, the overall modular approach permits configuration of the product according to customer and application requirements.

In the wire guide plates of invention, a second wire guide can be a hook or an opening located on or near the first side of the wire guide plate. This is desirable in cases where a large telecommunications module - and therefore a large wire guide plate - cannot be employed due to space restrictions. By providing a hook or opening, the dimensions of the wire guide plate can be reduced since the hook or opening requires less installation space. The second side application remains guided by the first wire guide(s), while the hook or opening guides wires to the third side application. In both cases, it is still possible to concentrate wire access, provide neat wire management and locate the wires in a defined area.

In an embodiment of the current invention, the second side of the wire guide plate is a front side, and the third side of the wire guide plate is a rear side opposite the front side. In this case the wire guide plate of the invention is particularly advantageous since it is applicable to common telecommunications modules having contacts on the front and rear sides.

The wire guides may be arranged substantially in one plane, such as on a surface of the wire guide plate. The surface is preferably constituted by one of the main surfaces of the plate. By providing the wire guides in one plane (i.e., on a single surface of the wire guide plate) without the need for wire guides on the other side of the plate, the plate's thickness is reduced, thereby increasing the density of telecommunications modules in a distribution point.

In the wire guide plates of the invention, it is generally advantageous when the first and/or second wire guides are formed as wire guide channels arranged in a first and a second array. Wire guide channels are particularly suited to guide single wires or groups of wires or cables in a defined arrangement from the wire entry on the first side to, for example, rows of contacts on the second and/or third sides of a telecommunications module onto which the wire guide plate is mounted.

It may prove particularly advantageous if the arrays of wire guides are substantially symmetric to one other. In such as case there is the same number of channels for serving both the second and third side access to the telecommunications module. Cable side pair arrangements allow for the possibility of requiring fewer channels than terminated pairs, because cables can be structured on a two or four pair basis. In such a case, encountered for instance in a high data rate network, a cable pair arrangement is advantageous for transmission. Both cable pairs and jumpers can be guided to their proper termination poin, with a very clean arrangement, an advantage for both installation and maintenance.

The wire guide plates of the invention are generally adapted to be mounted on a telecommunication module. For this reason, the wire guide plate may have at least one latch hook for attaching the wire guide plate to the telecommunication module. The latch hook may have a structure that enables it to engage with a corresponding structure on the telecommunications module, preferably in a releasable way. The wire guide plate is therefore well suited for a versatile deployment.

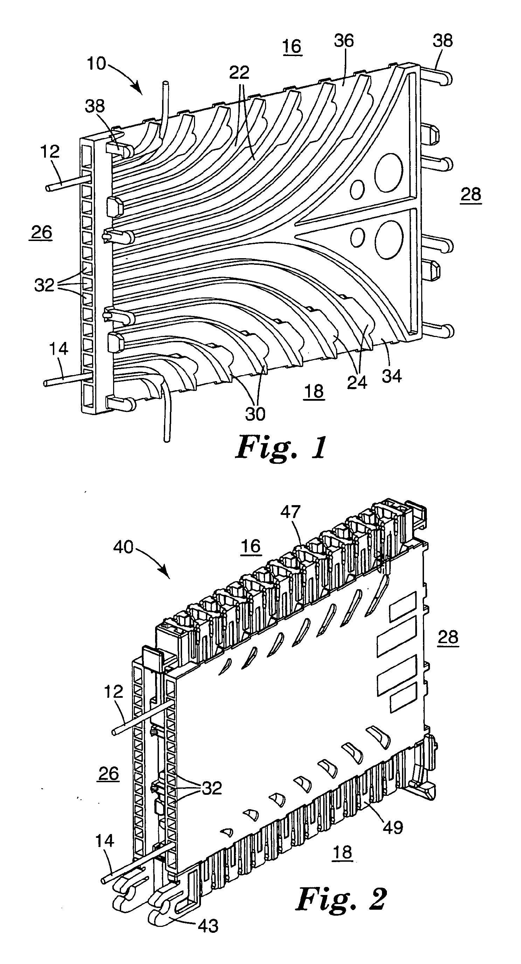

Turning now to FIG. 1, a perspective view of the wire guide plate 10 from a main surface is shown. A plurality of, in the case shown in the figure, eight first wire guides 22 and eight second wire guides 24 are formed on the surface of wire guide plate 10. The wire guides 22, 24 are wire guide channels each formed by two ridges 30 with two adjacent wire guides 22, 24 sharing one ridge 30 between them. The ridges 30 are essentially formed as partition walls or web-like protrusions extending from the surface of the wire guide plate 10. When viewed with regard to an extension from the first (left) side 26 to an opposite (right) side 28 of the wire guide plate 10, the first wire guides 22 are positioned in an upper half of the first side and the second wire guides 24 start in a lower half. In other words, wires, such as those indicated by reference numerals 12 and 14 in the drawing, are guided to the front side (second side) 16 and rear side (third side) 18, respectively, where contacts of a telecommunications module (not shown) are exposed and are inserted into the wire guides 22, 24 through wire entries 32 from the upper and lower halves of the first side 26, respectively. For a certain distance all wire guides 22, 24 extend substantially straight and parallel to each other. Depending on their location with respect to the front-rear direction, the wire guides 22, 24 are formed arc-shaped beginning at different locations in the left-right direction of the figure to extend to respective exits 34, 36 on the rear and front sides. In this embodiment the wire guide channels are arranged in two symmetrical arrays, one for serving rear side wire exits 34 and the other for serving front side exits 36. Also shown are a plurality of latch hooks 38 protruding substantially perpendicularly to the plane of the wire guide plate and located on the left and right edges of the wire guide plate. These latch hooks are preferably flexible and have a projection so that reliable mounting to a telecommunications module can be realized by cooperating and engaging with corresponding holes, recesses, edges or similar structures on the telecommunications module.

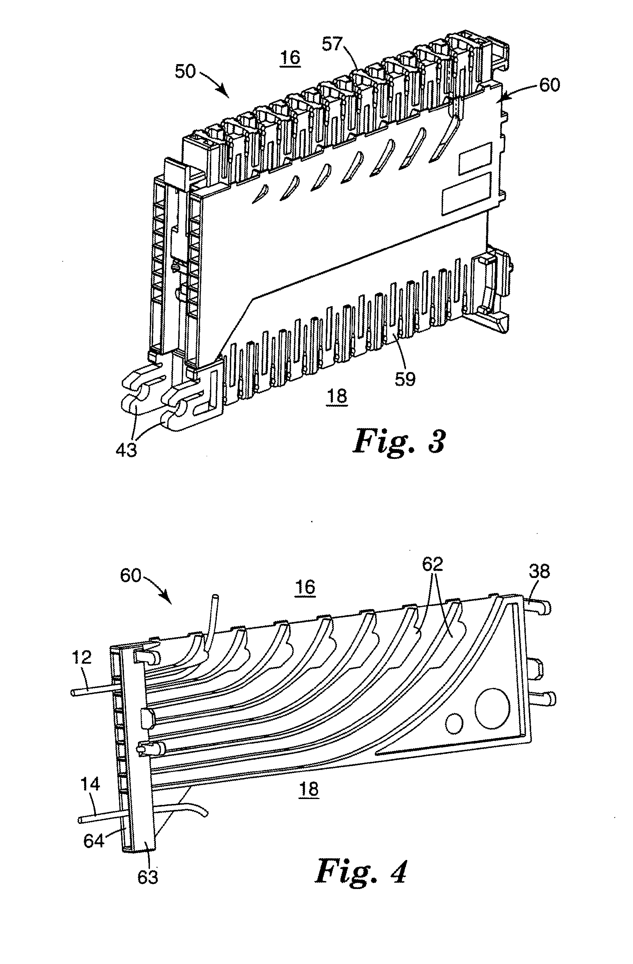

In FIG. 2, a double-sided termination strip 40 is shown as an example of a telecommunications module to which the wire guide plate of FIG. 1 is mounted. The wire guide plate of FIG. 1 is mounted to the termination strip 40 with ridges 30 and wire guides 22, 24 oriented towards the side of the termination strip. Thus, the wire guide plate of FIG. 1, in cooperation with the surface, for example of a housing, on the side of the termination strip, defines, in the embodiment shown, substantially closed wire guides. Closed, as used in this context, indicates that wires can be inserted at entries 32 and exits 34, 36. However, between the entries 32 and exits 34, 36, a guide closed on all four sides is formed. Thus, in FIG. 2 the backside of the wire guide plate, which is directed away from the viewer in FIG. 1, is visible. This explanations also apply to FIG. 3 and 4 described in more detail below.

The termination strip has, in the embodiment shown, at its front side 16 (top in the drawing) a row of contacts 47, where connectors or jumpers can be provided to flexibly connect exchange side services (such as POTS) to customers. The strip also comprises a row of contacts 49 on the rear side 18, where again connectors or jumpers may be provided. The rear side 18 can be used to connect other services, such as ADSL-connections. Both front and rear side contacts 47, 49 of the strip 40 are reached by wires or cables 12, 14 inserted into the entries 32 from the left side 26 (first side) of the wire guide plate 10, which are then respectively guided by the wire guide channels 22, 24 towards the exits (not shown in FIG. 2) on the front and rear sides. In addition to the wire guide plate mounted on one side of the termination strip, another wire guide plate may be mounted on the opposite side (the side facing away in the drawing) of the termination strip, thereby increasing the connectivity of the termination strip 40. Alternatively, according to application requirements, a conventional wire guide plate, i.e., having exits and entries on a single side (e.g., right and front side, respectively), may be provided on the opposite side of the termination strip, allowing for versatile deployment of the assembly comprising strip and wire guide plates. The telecommunications module may also have two snap arms 43 on the short edge of the rear side 18 thereof, which serve to pivotally connect the module to a telecommunications carrier (not shown), e.g., in a distribution frame. Each snap arm defines a circular opening having a slit extending towards the opening from the free end of the arm. The snap arms are, therefore, adapted to be snap-fitted to a bar or the like of the carrier and can be pivotally rotated about the bar in order to easily access the rear side contacts.

FIG. 3 is a perspective view of a telecommunications module 50 having a short installation depth, i.e., a short extension in front-rear 16, 18 direction. Here, a wire guide plate 60 is used which has, in the embodiment shown in FIG. 4, eight wire guide channels 62 for serving the contacts 57 on the front side 16 of the module 50, while only a guiding opening 64 is provided to guide cables to the contacts 59 on the rear side 18. The entries to the wire guide channels and the guiding opening are covered and closed from above (i.e., above the plane of the drawing) by an elongated strip-like member 63, while they are closed from below by the plane of the wire guide plate. The wire guide channels themselves may be closed by cooperation with the surface of the telecommunications module 50. As in the preceding embodiments, the wire guide plate of the embodiment shown may have latch hooks 38 protruding substantially perpendicularly to the plane of the wire guide plate. They can be located on the left and right edges of the plate and are generally flexible and have at least one projection for reliable mounting to a telecommunication module, as described above. The short telecommunications module may also have, as described above, snap arms 43 to be pivotally attached to a carrier such as in a distribution frame.

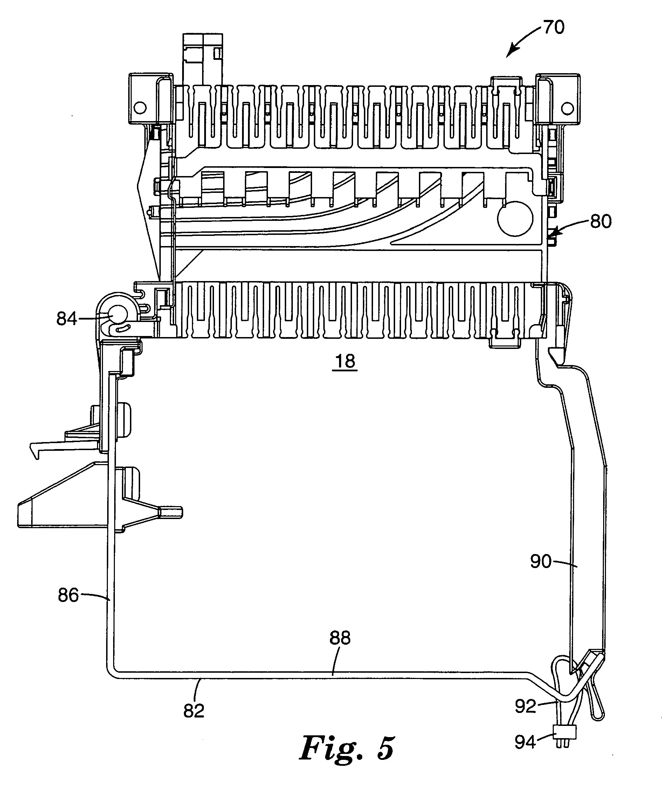

FIG. 5 shows yet another embodiment of a telecommunications module 70 to which a wire guide plate 80 is attached. In this exemplary embodiment, the telecommunications module 70 is attached to a carrier 82 by a hinge 84. The carrier 82 has a generally L-shaped cross-section with a leg 86, at the end of which the hinge 84 is provided, and a bottom 88. The telecommunications module 70 may have a second leg 90 on the side opposite the side of leg 86, attached to the bottom 88 of the carrier 82. The second leg 90 may be attached to telecommunications module 70 and releasably secured to the carrier 82. For example, a latch hook can be provided at that end of second leg 90, which is close to the bottom 88 of the carrier 82. This latch hook can engage with a hole or a similar structure in the carrier 82.

Generally, the second leg 90 can be released from the bottom 88, and the telecommunications module 70 can be swiveled about hinge 84. This enables access to the rear side 18 of the telecommunications module, where, for example, functional modules such as splitter modules can be present. In order to prevent unauthorized access to this area, a security feature, such as a security wire 92 and a lead seal 94, can be present. The security wire 92 can, for example, be inserted through an opening (not shown) in the bottom 88 and the second leg 90, so that the telecommunications module 70 can only be swiveled about hinge 84, when the lead seal is broken. The security wire 92 and lead seal 94 can be replaced by a padlock or an electronic identification system, which only permits access when certain identification information is provided.

The present invention has now been described with reference to several individual embodiments. The foregoing detailed description has been given for clarity of understanding only. No unnecessary limitations are to be understood or taken from it. All references to right, left, front and rear are exemplary only and do not limit the claimed invention. It will be apparent to those skilled in the art that many changes can be made in the embodiments described without departing from the scope of the invention. Thus, the scope of the present invention should not be limited to the exact details and structures described herein, but rather by the structures described by the language of the claims, and the equivalents of those structures.

## Claims

1. A wire guide plate (10, 60), which is attachable to a telecommunications module (40, 50) having telecommunications contacts (47, 49; 57, 59), and adapted to guide wires (12, 14) to different sides (16, 18) of the telecommunications module, where the wires (12, 14) are connectable with the telecommunications contacts, the wire guide plate having at least one first (22; 62) and at least one second wire guide (24; 64), the wire guides (22, 24; 62, 64) having entries (32) and at least the first wire guide (22; 62) having an exit in the vicinity of at least one telecommunications contact, wherein the entries (32) of the wire guides (22, 24; 62, 64) are located on a first side (26), the exists of the first wire guides (22; 62) are located on a second side (16), and the second wire guide (24; 64) is adapted to guide wires (14) to a third side (18) different from the second side (16).

2. The wire guide plate in accordance with claim 1, wherein the second wire guide is a hook or an opening (64) located on or near the first side (26).

3. The wire guide plate in accordance with claim 1 or 2, wherein the second side is a front side (16) and the third side is a rear side (18) opposite the front side (16).

4. The wire guide plate in accordance with one of the preceding claims wherein the wire guides (22, 24; 62, 64) are arranged substantially in one plane.

5. The wire guide plate in accordance with any of the preceding claims, wherein the first (22; 62) and/or second wire guide (24) are formed as wire guide channels arranged in a first and a second array.

6. The wire guide plate in accordance with claim 5, wherein the arrays of wire guides are substantially symmetric to one other.

7. The wire guide plate in accordance with any of the preceding claims, further having at least one latch hook (38) for attaching the wire guide plate to the telecommunications module.

8. A telecommunications module (40, 50) having at least one wire guide plate (10, 60) in accordance with any of the preceding claims attached thereto.
